# FASCICULE DE BREVET EUROPEEN

(11) **EP 3 870 811 B1**
(45) Date de publication et mention de la délivrance du brevet: **07.02.2024**
(21) Numéro de dépôt: 19813383.7
(22) Date de dépôt: 25.10.2019
(51) Int. Cl.: F01D 15/10, F02K 3/06, H02K 7/18

(54) **TURBOMACHINE À MACHINE ÉLECTRIQUE COMPORTANT UN ANNEAU DE ROTOR ACCOLÉ À LA SOUFFLANTE**
TURBOMASCHINE MIT EINER ELEKTRISCHEN MASCHINE MIT EINEM AN DEM GEBLÄSE ANGEBUNDENEN RING
TURBOMACHINE WITH AN ELECTRICAL MACHINE HAVING A ROTOR RING ADJACENT TO THE FAN

(30) Priorité: 26.10.2018 FR 1859937
(43) Date de publication de la demande: 01.09.2021
(73) Titulaire: SAFRAN AIRCRAFT ENGINES, 75015 Paris (FR)
(72) Inventeur: FRANTZ, Caroline, Marie, 77550 MOISSY-CRAMAYEL (FR); CHARIER, Gilles, Alain, Marie, 77550 MOISSY-CRAMAYEL (FR); GUILLOTEL, Loïc, Paul, Yves, 77550 MOISSY-CRAMAYEL (FR); MILLIER, Vincent, François, Georges, 77550 MOISSY-CRAMAYEL (FR)
(74) Mandataire: Gevers & Orès
(86) Numéro de dépôt international: PCT/FR2019/052554
(87) Numéro de publication internationale: WO 2020/084270

(56) Documents cités:
- WO-A1-2011/109659
- DE-A1-102015 214 255
- US-A1- 2014 246 864

## Description

L'invention concerne une turbomachine d'aéronef comportant une machine électrique.

L'invention concerne plus particulièrement une turbomachine d'aéronef comportant une soufflante, mobile en rotation à l'intérieur d'un carter, et une machine électrique comportant un rotor solidaire de la soufflante et un stator solidaire dudit carter. Outre une turbomachine d'aéronef, l'invention concerne également un kit d'électrification d'une turbomachine conventionnelle et un module d'électrification d'une turbomachine conventionnelle.

### ETAT DE LA TECHNIQUE ANTERIEURE

Un turboréacteur conventionnel destiné à motoriser un aéronef commercial est généralement un turboréacteur à double corps ou triple corps qui comprend un corps haute pression comportant un compresseur haute pression et une turbine haute pression, un corps basse pression comportant un compresseur basse pression et une turbine basse pression et entraînant la soufflante, et éventuellement un corps à pression intermédiaire comportant un compresseur à pression intermédiaire et une turbine à pression intermédiaire, logés dans une nacelle du turboréacteur.

La puissance fournie par un tel turboréacteur est généralement destinée à assurer la propulsion de l'aéronef, mais aussi assurer le production de courant électrique destinée à assurer différentes fonctions embarquées de l'aéronef comme, de manière non exhaustive, l'alimentation des commandes de vol, l'antigivrage des ailes, l'alimentation du système de conditionnement d'air cabine, l'alimentation des commandes de vol, l'antigivrage des ailes, l'alimentation du système de conditionnement d'air cabine, l'éclairage de la cabine, ou encore l'alimentation du poste de pilotage.

Conventionnellement, un turboréacteur comporte une boîte d'engrenages ou AGB (acronyme anglo-saxon de Accessory Gear Box) qui est disposée à l'extérieur du turboréacteur, qui est reliée mécaniquement par un arbre secondaire radial au corps haute pression, et qui comporte un générateur utilisé pour transformer une partie de la puissance mécanique délivrée par le turboréacteur en puissance électrique, et un démarreur permettant le démarrage de la turbomachine.

La tendance actuelle vise à augmenter la part des équipements électriques embarqués, réputés plus souples d'emploi au niveau de l'aéronef, par exemple pour l'entraînement de compresseurs destinés à assurer la pressurisation de la cabine de l'aéronef. Les besoins en puissance électrique pouvant être fournie par le turboréacteur vont donc croissants et ne peuvent plus être assurés par des générateurs électriques conventionnels sans entraîner une augmentation globale du poids du turboréacteur et une dégradation de ses performances globales.

Il existe donc un réel intérêt pour des machines électriques pouvant assurer des fonctions de générateur supplémentaire permettant de fournir une puissance électrique additionnelle. Les machines électriques réversibles assurent cette fonction de générateur, mais aussi de démarreur, et à ce titre de telles machines assurent un gain de poids évident.

Suivant un mode de réalisation connu de la demande internationale WO-2007/036202, une telle machine électrique, fonctionnant de manière réversible et cumulant à ce titre les fonctions de générateur et de démarreur, peut être agencée à l'intérieur même du turboréacteur, et plus précisément dans le corps haute pression.

Dans ce document, lors du démarrage du turboréacteur, on commence par mettre le corps haute pression en rotation, à l'aide du générateur électrique utilisé comme moteur électrique. Le compresseur haute pression alimente alors la chambre de combustion en air sous pression, ce qui permet à la combustion de s'établir, et à l'étage haute pression du turboréacteur de démarrer. La turbine basse pression est alors entraînée en rotation par le flux d'air primaire sortant, entraînant ainsi le corps basse pression et la soufflante. Le turboréacteur est alors démarré, et l'on coupe l'alimentation du démarreur électrique qui arrête de fonctionner comme moteur d'entraînement du compresseur haute pression.

L'agencement du générateur électrique au niveau du corps haute pression présente comme avantage principal le fait que ce générateur peut d'une part être utilisé comme moteur électrique pour le démarrage du turboréacteur, et d'autre part peut être utilisé comme générateur électrique pour fournir du courant au reste de l'aéronef.

Cette machine électrique remplace les générateur et démarreur précédemment connus de l'état de la technique, mais ne permet d'apporter de gain significatif de puissance électrique.

De plus, cette disposition présente l'inconvénient de présenter un mauvais rendement global de la conversion de puissance mécanique en puissance électrique. En effet, la surconsommation de carburant nécessaire pour fournir une puissance électrique donnée est supérieure lorsque le générateur électrique prélève de la puissance dans le corps haute pression par rapport à ce qu'elle peut être lorsqu'il prélève de la puissance sur le corps basse pression. De plus, l'agencement d'un générateur électrique au niveau du corps haute pression pose de nombreux problèmes d'encombrement et d'accessibilité. Enfin, la mise en place d'un générateur électrique tirant sa puissance du corps haute pression peut poser un problème d'opérabilité pour le turboréacteur, car un prélèvement de puissance mécanique trop élevé est susceptible de provoquer le pompage du compresseur HP, en particulier quand le moteur fonctionne à bas régime.

De plus, cette conception ne permet pas d'assistance ni d'entraînement purement électrique de la soufflante par la machine électrique.

Pour remédier à ces inconvénients, on a proposé dans les documents EP- 2.048.329 et DE-10.2015.214255-A1 un turboréacteur comportant un corps haute pression et un corps basse pression entraînant une soufflante disposée dans un carter fixe, et un générateur électrique agencé dans la soufflante et prélevant une puissance sur celle-ci, le générateur comportant un rotor intégré à la soufflante, et un stator intégré au carter de soufflante. Dans ces documents, le rotor comporte des aimants permanents qui sont intégrés à l'extrémité des aubes de soufflante.

Cette solution permet de disposer d'une place importante pour la machine électrique. Le carter de soufflante, qui est fixé à la nacelle, est suffisamment large pour abriter les bobinages permettant la production de courant électrique et des harnais électriques permettant l'acheminement de ce courant vers un pylône supportant le turboréacteur. La mise en place et la maintenance du générateur électrique ne sont donc pas ou peu perturbées par des problèmes d'encombrement.

En outre, la zone de la soufflante, zone délimitée par le carter de soufflante et les capots de la nacelle qui l'entoure, est une zone froide, relativement aux autres parties de la turbomachine de température typiquement inférieure à 70°C. Ce positionnement permet de s'affranchir de certaines contraintes de refroidissement.

Par exemple, les aimants permanents de la machine électrique ne nécessitent pas de moyens de refroidissement additionnels car la température au sein de la soufflante n'atteint jamais la température de Curie, au-delà de laquelle ils perdraient leurs propriétés magnétiques.

De la même façon, les bobinages du stator de la machine électrique étant placés dans la même zone froide du turboréacteur, ils ne nécessitent pas de moyens de refroidissement additionnels tels que des systèmes de refroidissement liquide.

Ceux-ci peuvent donc avoir un encombrement et une masse réduits.

En outre, du fait de la dimension importante de la soufflante, il est possible de disposer d'une machine électrique de relativement grande puissance, apte à alimenter en courant simultanément différents équipements électriques de l'aéronef sur lequel est monté le turboréacteur.

Cette possibilité a d'autant plus d'importance que le nombre d'équipements électriques embarqués sur les aéronefs va croissant.

Une telle turbomachine permet notamment, en évitant de prélever de la puissance de manière excessive sur le corps haute pression, d'éviter les phénomènes de pompage et donc les problèmes d'instabilité et d'opérabilité du turboréacteur à bas régime.

Dans cette conception et jusqu'à maintenant, les aimants permanents ont été directement intégrés dans les aubes ou rapportés sous la forme de talons fixés à l'extrémité des aubes.

Dans ces deux conceptions connues, une masse est ajoutée en bout de chaque aube, et de ce fait les aubes sont soumises à une force centrifuge plus importante qu'une aube conventionnelle. Cette force centrifuge peut entraîner des phénomènes d'élongation radiale des aubes et être incompatible avec le maintien à tous les régimes de rotation d'un jeu fonctionnel adéquat entre les aubes de la soufflante et son carter.

En outre, l'augmentation globale de la masse de chaque aube, par rapport à une aube conventionnelle impliquant comme on l'a vu une augmentation des forces centrifuges s'exerçant sur les aubes, ces aubes nécessitent pour leur maintien dans la soufflante l'utilisation d'un disque central de soufflante de taille supérieure.

Enfin, en cas de perte d'une telle aube, l'énergie cinétique libérée par cette aube est plus importante que celle libérée par une aube conventionnelle dans le même cas. Il s'ensuit que l'utilisation d'une telle aube nécessite de disposer d'un carter de soufflante plus massif, apte à supporter l'éjection d'une telle aube sans risque d'être traversée par celle-ci. Une telle contrainte dimensionnelle pénalise largement la masse de la turbomachine.

Pour remédier à cet inconvénient, on peut découpler le rotor de la machine électrique de la soufflante en proposant une turbomachine utilisant un rotor de machine électrique distinct de la soufflante, dont des bras portent à leurs extrémités des aimants permanents, comme cela est divulgué par le document US 2014/246864-A1, qui montre les caractéristiques techniques du préambule des revendications indépendantes 1 et 8. et, dans le domaine hydraulique ou éolien par le document WO 2011/109659-A1.

Cette conception, si elle résout le problème de la soumission des pales de soufflante à des forces centrifuges accrues, ne fait que déplacer le problème car les bras du rotor de soufflante sont eux aussi soumis à des forces centrifuges et ces forces centrifuges peuvent entraîner des phénomènes d'élongation radiale des bras, et être incompatibles avec le maintien à tous les régimes de rotation d'un entrefer adéquat entre le stator et le rotor de la machine électrique.

De plus, comme pour la solution précédente, de tels bras, de masse élevée, nécessitent pour leur maintien dans la soufflante l'utilisation d'un disque central de taille élevée.

Enfin, en cas de rupture d'un tel bras suivie d'une éjection de ce bras, l'énergie cinétique libérée par ce bras est très élevée. Il s'ensuit que l'utilisation d'un tel bras nécessite également de disposer d'un carter de soufflante plus massif qu'un carter conventionnel, apte à résister à l'éjection d'une tel bras sans risque d'être traversée par celui-ci, ce qui pénalise également largement la masse de la turbomachine.

### EXPOSÉ DE L'INVENTION

L'invention remédie à ces inconvénients en proposant une turbomachine comportant une machine électrique de forme annulaire accolée en amont de la soufflante, dont le rotor est conformé en anneau.

Plus particulièrement, l'invention propose une turbomachine d'aéronef comportant une soufflante mobile en rotation à l'intérieur d'un carter, et une machine électrique comportant un rotor solidaire de la soufflante et un stator solidaire dudit carter, caractérisée en ce que le rotor de la machine électrique comporte un anneau mobile en rotation à l'intérieur du stator, qui est relié par des bras à un cône monté en amont de la soufflante.

De manière connue, une turbomachine à double flux comporte en entrée de sa soufflante un capot d'entrée tournant Un tel capot d'entrée tournant est généralement constitué de deux parties fixées l'une à l'autre, la partie avant en forme de cône, et la partie arrière en forme de virole. De manière connue, l'extrémité arrière de la virole arrière affleure les plateformes des aubes de soufflante, en se situant dans la continuité aérodynamique avant de celles-ci. Le cône avant présente quant à lui une extrémité avant en forme de pointe de cône centrée sur l'axe de rotation du capot d'entrée, correspondant également à l'axe longitudinal de la soufflante et de l'ensemble de la turbomachine.

Une telle turbomachine est particulièrement appropriée à la mise en oeuvre d'une architecture de type UHBR ID, acronyme anglo-saxon de "Ultra High By Pass Ratio, Integral Drive", qui correspond à une configuration de moteur à soufflante carénée à très haut taux de dilution comprenant un réducteur relié au corps BP, dont le but est de pouvoir optimiser indépendamment les vitesses de rotation de la soufflante et de la turbine BP et qui comprend une ou plusieurs machines électriques sur les parties HP et BP de la turbomachine ayant des puissances de quelques kW à plusieurs MW.

Selon d'autres caractéristiques de l'invention :
- un moyeu du rotor de la machine électrique, lié à l'anneau, est fixé entre deux parties respectivement amont et aval du cône,
- un disque de la soufflante comporte une jante tubulaire qui comporte un alésage cannelé permettant l'accouplement du disque de soufflante à un arbre de soufflante entraîné par la turbomachine, ladite jante étant munie d'une première collerette amont externe, et :
   - la partie aval du cône comporte une extrémité aval fixée sur la première collerette amont externe du disque de soufflante et une extrémité amont munie d'une deuxième collerette amont externe,
   - le moyeu de rotor de la machine électrique comporte une paroi sensiblement annulaire comportant une extrémité aval fixée à la deuxième collerette amont externe, une extrémité amont munie d'une troisième collerette amont externe, et un voile interne tubulaire qui comporte un alésage cannelé permettant l'accouplement du moyeu de rotor de la machine électrique à l'arbre de soufflante,
   - la partie amont du cône comporte une extrémité aval fixée sur la troisième collerette amont externe du disque de la machine électrique,
- le rotor de la machine électrique comprend au moins deux bras reliant le moyeu à l'anneau,
- le rotor de la machine électrique comporte deux ou trois bras,
- chaque bras est sensiblement rectiligne et une aube de la soufflante est située sensiblement, selon l'écoulement des gaz au travers de la soufflante, dans le sillage dudit bras.
- chaque bras comporte une extrémité de jonction avec le moyeu qui est tangente avec ledit moyeu.

L'invention concerne aussi un kit d'électrification d'une turbomachine conventionnelle d'axe A comportant une soufflante mobile en rotation à l'intérieur d'un carter, ladite soufflante comportant un disque entraîné en rotation par un arbre de soufflante entraîné par un arbre basse pression de la turbomachine et étant munie d'un cône conventionnel fixé en amont dudit moyeu, caractérisé en ce qu'il comporte :
- un stator, configuré pour être fixé en amont dudit carter,
- un cône adaptable en deux parties respectivement amont et aval,
- un rotor de machine électrique comportant un moyeu de rotor de machine électrique relié par deux ou trois bras à un anneau, et qui est destiné à être fixé entre les deux parties amont et aval du cône adaptable,
ladite partie aval du cône adaptable étant configurée pour être substituée au cône conventionnel, le moyeu du rotor de machine électrique étant configuré pour être fixé à la partie aval du cône adaptable et à l'arbre de soufflante, et la partie amont du cône étant configurée pour être fixée au moyeu du rotor de machine électrique.

Les éléments de ce kit peuvent être utilisés les uns après les autres ou ils peuvent se présenter réunis sous la forme d'un module d'électrification d'une turbomachine conventionnelle comportant un assemblage modulaire d'éléments du kit décrit précédemment, ledit module comprenant le rotor de la machine électrique dont le moyeu est assemblé aux parties amont et aval de cône adaptable et le stator, entourant ledit rotor, qui est bridé par rapport audit rotor.

A l'aide de ce module, une turbomachine conventionnelle d'aéronef peut être électrifiée selon un procédé d'électrification comportant :
- une première étape au cours de laquelle on fournit une turbomachine conventionnelle,
- une deuxième étape au cours de laquelle on dépose le cône conventionnel de la turbomachine,
- une troisième étape au cours de laquelle on présente le module d'électrification devant la soufflante de la turbomachine,
- une quatrième étape au cours de laquelle on fixe le stator de la machine électrique au carter et le cône adaptable, porteur du rotor de la machine électrique, au disque de la soufflante,
- une cinquième étape au cours de laquelle on raccorde le module d'électrification à l'aéronef,
- une sixième étape optionnelle au cours de laquelle on ôte au moins une bride liant le stator au rotor.

### DESCRIPTION DES FIGURES

L'invention sera mieux comprise et d'autres détails, caractéristiques et avantages de la présente invention apparaîtront plus clairement à la lecture de la description qui suit faite à titre d'exemple non limitatif et en référence aux dessins annexés, dans lesquels :
- la figure 1 est une vue générale en coupe axiale d'un turboréacteur double flux de type UHBR ID selon l'état de la technique ;
- la figure 2 est une vue en perspective d'une machine électrique selon l'invention accolée à une soufflante ;
- la figure 3 est une vue en perspective d'un anneau d'un rotor de machine électrique selon l'invention ;
- les figures 4 à 6 sont des vues en coupe d'une extrémité amont d'une turbomachine au cours des étapes d'un procédé d'électrification selon l'invention ; et
- la figure 7 est une diagramme-bloc illustrant les étapes d'un procédé d'électrification d'une turbomachine selon l'invention.

### DESCRIPTION DETAILLEE

Dans la description qui va suivre, des chiffres de référence identiques désignent des pièces identiques ou ayant des fonctions similaires. Les désignations "amont" et "aval" sont définies par rapport à un sens d'écoulement des gaz à l'intérieur d'une turbomachine.

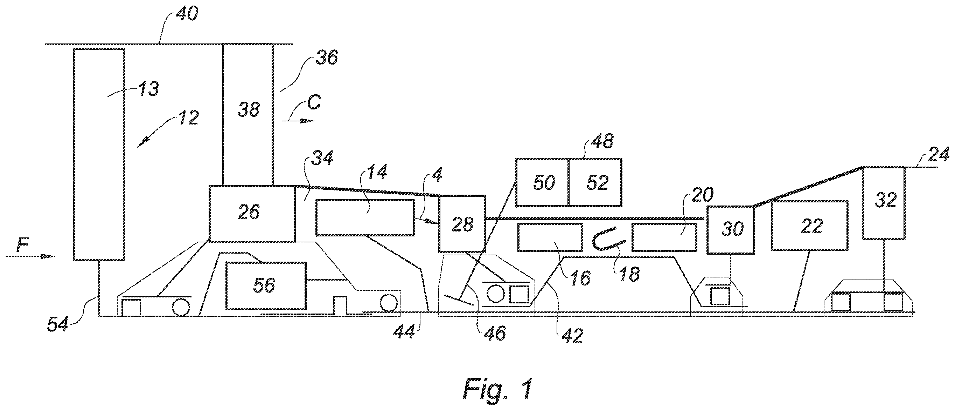

On a représenté à la figure 1 une turbomachine 10 d'aéronef conventionnelle de type UHBR ID, qui est ici un turboréacteur à double flux et à double corps. L'architecture globale de cette turbomachine 10 est une architecture classique à deux corps, connue de nombreuses turbomachines connues de l'état de la technique. Pour cette raison, dans la suite de la présente description, toute référence à l'architecture générale d'une turbomachine selon l'état de la technique sera faite en considérant la figure 1.

Pour l'essentiel, la turbomachine 10 comporte, d'amont en aval selon le sens d'écoulement des flux de gaz F dans la turbomachine, une soufflante 12, munie de pales 13 et montée tournante dans un carter 40, un compresseur basse-pression 14, un compresseur haute-pression 16, une chambre annulaire de combustion 18, une turbine haute-pression 20, une turbine basse-pression 22 et une tuyère d'échappement 24.

Les compresseur basse-pression 14, compresseur haute-pression 16, chambre annulaire de combustion 18, turbine haute-pression 20, turbine basse-pression 22 et tuyère d'échappement 24 sont respectivement logés entre des carter amont 26, carter inter-compresseurs 28, carter inter-turbines 30 et carter d'échappement 32 de la turbomachine.

Le flux d'air F pénétrant dans la soufflante se divise en un flux chaud HO qui circule dans une veine primaire 34 traversant les compresseur basse-pression 14, compresseur haute-pression 16, chambre annulaire de combustion 18, turbine haute-pression 20, turbine basse-pression 22 et tuyère d'échappement 24, et un flux froid CO circulant autour des carters 26, 28, 30, 32 dans un canal de flux froid 36. Des aubes 38 d'un redresseur de sortie ou OGV, acronyme anglo-saxon de "outlet guide vane" sont placées dans le canal de flux froid 36 et participent au soutien du carter de soufflante 40. Les flux froid C et chaud H se rejoignent en sortie de la tuyère d'échappement 24.

Un rotor du compresseur haute-pression 16 et un rotor de la turbine haute-pression 20 sont reliés par un arbre haute-pression 42 et forment avec lui un corps haute-pression. Un rotor du compresseur basse-pression 14 et un rotor de la turbine basse-pression 22 sont reliés par un arbre basse-pression 44 et forment avec lui un corps basse-pression.

L'arbre haute pression 42 entraine par l'intermédiaire d'un arbre radial 46 une boite d'engrenages 48 qui contient ici un démarreur 50 et un générateur 52 indépendants. Selon certaines autres architectures connues de l'état de la technique, le démarreur 50 et le générateur 52 peuvent être remplacés par une machine électrique (non représentée) formant alternativement démarreur et générateur.

Dans la partie amont de la turbomachine 10, la soufflante 12 est reliée à un arbre de soufflante 54 qui, dans l'exemple représenté, est lié en rotation à l'arbre BP 44 par l'intermédiaire d'un réducteur 56, par exemple un réducteur planétaire ou épicycloïdal 56, qui a été représenté ici de manière schématique, dont un organe est lié l'arbre de soufflante 54, un organe est lié à l'arbre basse pression 44 et un organe est lié au carter amont 26.

Par exemple un planétaire est lié l'arbre 44 du corps basse pression, un porte-satellites est lié l'arbre 54, et une couronne est liée au carter 26

La soufflante 12 peut ainsi, lorsqu'elle est de très grande dimension, être mue à une vitesse de rotation inférieure à celle de l'arbre BP 44, afin de mieux l'adapter aérodynamiquement.

Dans cette conception toutefois, la production d'énergie électrique n'est assurée que par le générateur 52. Tant que les besoins de puissance électrique sont limités, cette conception est convenable. Toutefois, la puissance électrique pouvant être effectivement prélevée par le générateur 52 est limitée et n'est pas adaptée aux besoins croissants en puissance électrique des aéronefs modernes car la production d'une puissance électrique supérieure entraînerait nécessairement un prélèvement supplémentaire de puissance mécanique par le générateur 52 sur l'arbre haute pression HP 42, ce qui conduirait à une dégradation des performances du compresseur HP en risquant de provoquer des phénomènes de pompage.

En outre, dans cette configuration, le démarreur 48 ne permet que de démarrer la turbomachine, mais n'est pas à même de transmettre une quelconque puissance motrice à l'arbre 54 de la soufflante 12, puisqu'il n'est pas lié à l'arbre BP 44.

Pour bénéficier d'une puissance électrique supérieure, une solution consiste à proposer une turbomachine 10 comportant une machine électrique liée à la soufflante 12. Cette machine électrique est réversible et fonctionne aussi bien en générateur qu'en moteur. En tant que générateur, elle est donc à même de fournir une puissance électrique, indépendamment ou en complément du générateur 52.

Par ailleurs, en tant que moteur, une telle machine électrique est également capable d'assurer des fonctions propulsives et permet de fournir une puissance motrice supplémentaire à la soufflante.

De telles machines électriques ont jusqu'à présent été proposées selon deux conceptions.

Selon une première conception, on a proposé d'intégrer le rotor de la machine électrique directement à la soufflante. Dans ce cas, les aimants permanents ont toujours été soit directement intégrés dans les aubes 13 soit rapportés sous la forme de talons sectorisés qui sont fixés à l'extrémité des aubes 13.

Dans les deux cas, une masse est ajoutée en bout de chaque aube 13, et de ce fait les aubes 13 ainsi adaptées sont soumises à une force centrifuge plus importante que des aubes conventionnelles. Cette force centrifuge peut entraîner des phénomènes d'élongation radiale des aubes 13 et être incompatible avec le maintien à tous les régimes de rotation d'un jeu fonctionnel adéquat entre les aubes 13 de la soufflante 12 et son carter 40.

En outre, une aube 13 de masse élevée nécessite pour son maintien l'utilisation d'un disque central de dimension élevée.

Enfin, en cas de perte d'une telle aube 13, l'énergie cinétique libérée par cette aube 13 est plus importante que celle libérée par une aube conventionnelle dans le même cas. Il s'ensuit que l'utilisation d'une telle aube 13 nécessite de disposer d'un carter 40 de soufflante plus massif, apte à supporter l'éjection d'une telle aube 13 sans risque d'être traversée par celle-ci. Une telle contrainte dimensionnelle pénalise largement la masse de la turbomachine 10.

Selon une autre conception, on a proposé de rapporter le rotor de la machine électrique en l'accolant à la soufflante 12. Un tel rotor comporte des bras libres agencés dans le prolongement des aubes 13, en amont ou en aval de celles-ci, dont les extrémités portent des aimants permanents. Dans ce cas, comme précédemment, une masse est ajoutée en bout de chaque bras du rotor de la machine électrique, et de ce fait ces bras sont soumis à une force centrifuge qui peut entraîner des phénomènes d'élongation radiale des bras et être incompatible avec le maintien à tous les régimes de rotation d'un entrefer adéquat entre le rotor de la machine électrique et son stator.

Cette conception présente donc sensiblement les mêmes inconvénients que la conception précédente, ceux-ci s'appliquant à présent à ces bras libres.

L'invention remédie à cet inconvénient en proposant une nouvelle conception de rotor de machine électrique accolé à la soufflante 12.

La turbomachine selon l'invention comporte, comme la turbomachine de l'art antérieur, un réducteur planétaire ou épicycloïdal dont les organes sont liés à un carter de la turbomachine, à un arbre du corps basse pression, et à un arbre d'entraînement du disque de la soufflante.

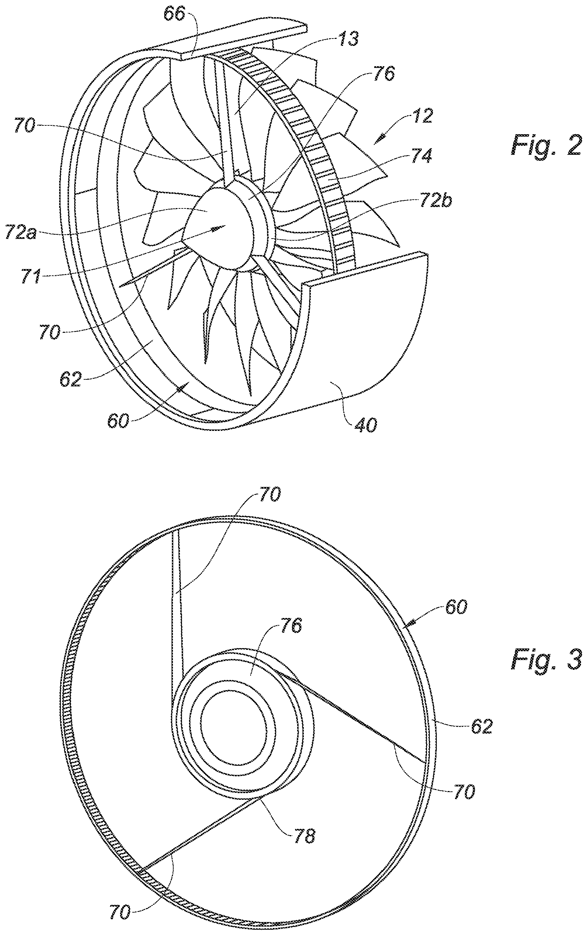

Conformément à l'invention, comme l'illustre la figure 2, un rotor 60 de la machine électrique comporte un anneau mobile 62 en rotation à l'intérieur d'un stator 66, qui est relié par des bras 70 à un cône 71 monté en amont de la soufflante 12.

Selon la conception qui a été représentée sur les figures, l'anneau 62 porte des aimants permanents 74. Il sera compris que cette configuration n'est pas limitative de l'invention, et que l'anneau 62 pourrait par exemple comporter des bobinages, les aimants permanents étant alors portés par le stator 66.

Cette solution permet en tout état de cause de dissocier la fonction aérodynamique des aubes 13 de la soufflante 12 de celle de la fonction de transmission du couple de la machine électrique, qui est réalisée par les bras 70 en amont des aubes 13 de la soufflante.

Les bras 70 étant avantageusement maintenus circonférentiellement par l'anneau mobile 62, les efforts résultants des forces centrifuges s'exerçant sur les bras 70 sont des efforts de compression qui sont à même d'être repris en partie par l'anneau ce qui permet de réduire les efforts s'exerçant sur les bras 70.

On peut donc ainsi bénéficier d'aubes 13 optimisées aérodynamiquement et de bras optimisés 70 permettant le passage du couple de la machine électrique. Les aubes 13 peuvent donc demeurer des aubes classiques qui peuvent être démontées sous les ailes de l'aéronef sans entraîner de dépose de la turbomachine 10, ce qui est un avantage significatif pour les compagnies aériennes.

La machine électrique se situe par ailleurs à l'extérieur de la turbomachine 10, ce qui permet de faciliter son refroidissement et d'en faciliter l'accès pour la maintenance.

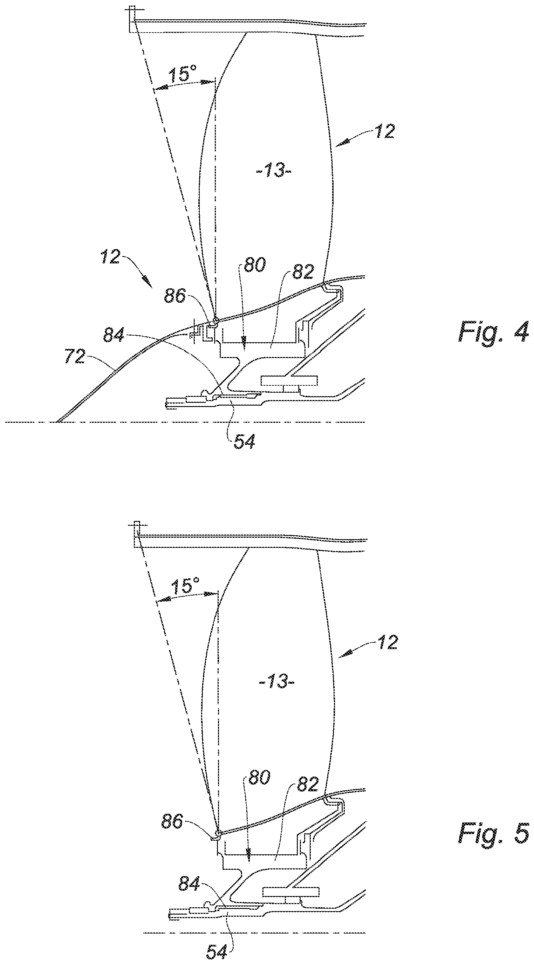

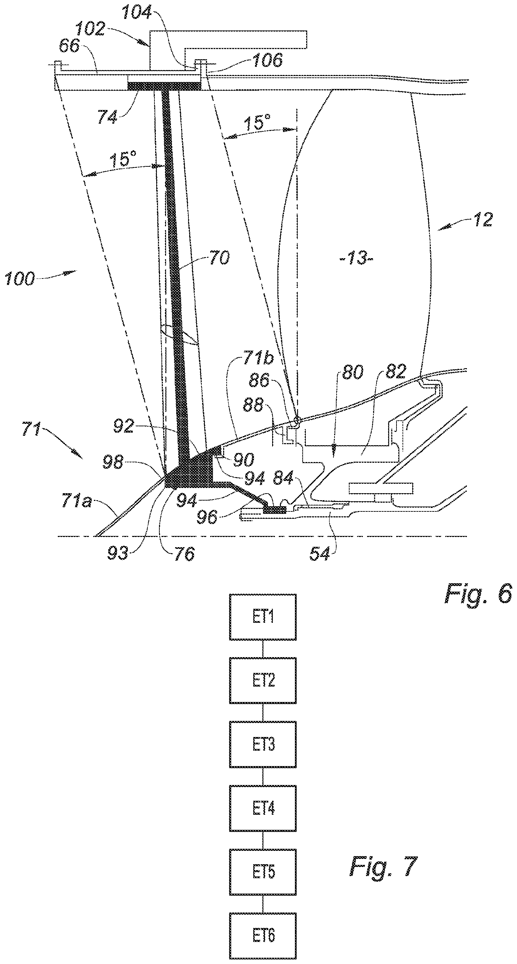

Pour assurer la liaison de l'anneau mobile 62 au cône 71, comme l'illustrent les figures 2 et 6, un moyeu 76 du rotor de la machine électrique, lié à l'anneau 62, est fixé entre deux parties respectivement amont et aval 72a, 72b du cône 71 qui est un cône adaptable venant en remplacement d'un cône 72 conventionnel tel que représenté à la figure 4.

Plus particulièrement, pour assurer la fixation du rotor 60 à la soufflante 12, comme l'illustrent les figures 4 à 6, on tire parti de la présence d'un disque 80 de la soufflante 12 muni d'une jante tubulaire 82 qui comporte un alésage cannelé 84 permettant l'accouplement du disque 80 à l'arbre de soufflante 54. Cet arbre 54 est, comme on l'a vu, entraîné par l'arbre BP 44 par l'intermédiaire d'un réducteur.

Comme l'illustre la figure 4, dans le cas d'une turbomachine conventionnelle, à l'avant de cette jante tubulaire 82 est conventionnellement agencé un capot d'entrée tournant 69 constitué de deux parties fixées l'une à l'autre, à savoir le cône **72,** et une première collerette amont externe 86 de la jante 82 sur laquelle est fixé directement ce cône 72. Le cône 72 comporte une extrémité libre 83 en forme de pointe centrée sur l'axe A rotation du capot d'entrée 69, qui se trouve correspondre avec l'axe de la soufflante, et une extrémité 85 de jonction avec la collerette 86 qui affleure sensiblement des plateformes 15 des aubes 13, de manière à être placée dans la continuité aérodynamique de celles-ci.

L'invention permet avantageusement d'électrifier une turbomachine conventionnelle en substituant un cône adaptable 71 représenté à la figure 6 au cône 72 d'origine de la turbomachine représenté à la figure 4. Ce cône 71 est réalisé en deux parties amont 71a et aval 71b et il est destiné à recevoir le rotor 60 de la machine électrique. Il se fixe en lieu et place du cône

A cet effet, comme l'illustre la figure 6, une partie aval 71b du cône adaptable 71 comporte une extrémité aval 88 qui est fixée sur la première collerette amont externe 86 du disque 80 et une extrémité amont munie d'une deuxième collerette amont externe 90. A cette deuxième collerette amont externe 90 est fixé le moyeu 76 du rotor 60 de la machine électrique, qui est relié par les bras 70 à l'anneau 62.

Le moyeu 76 comporte une paroi 92 sensiblement annulaire comportant une extrémité aval 94 fixée à la deuxième collerette amont externe 90 de la partie aval 71b du cône adaptable. Le moyeu 76 comporte une extrémité amont munie d'une troisième collerette amont externe 93 qui coopère avec la partie amont 71a du cône adaptable 71.

Le moyeu 76 du rotor 60 de la machine électrique comporte également un voile interne tubulaire 94 qui comporte un alésage cannelé 96 permettant l'accouplement du moyeu de rotor de la machine électrique à l'arbre de soufflante 54. C'est donc par ce voile 94 que chemine le couple de la machine électrique.

La partie amont 71a du cône adaptable 71 comporte pour sa part une extrémité aval 98 qui, comme on l'a vu, est fixée sur la troisième collerette amont externe 92 du moyeu 76 de rotor de la machine électrique.

Pour assurer le maintien de l'anneau 62 par rapport au moyeu 76, le rotor 60 de la machine électrique comprend au moins deux bras 70 reliant le moyeu 76 à l'anneau 62.

Pour limiter les perturbations du flux F entrant dans la soufflante, il est souhaitable que le nombre de ces bras soit aussi réduit que possible. C'est pourquoi de préférence, le rotor 60 de la machine électrique ne comporte pas plus de trois bras 70. Ainsi, le rotor de la machine électrique comporte deux ou trois bras 70 seulement.

Similairement à une soufflante conventionnelle, la soufflante 12 conserve une répartition régulière de ses aubes 13. Pour réduire les perturbations aérodynamiques créées par les bras 70, les bras 70 sont agencés de manière qu'une aube 13 soit située sensiblement, selon l'écoulement des gaz au travers de la soufflante 12, dans le sillage de chaque bras 70. Dans le même but, chaque bras 70 est sensiblement rectiligne. Le flux d'air F est donc perturbé au minimum.

Les bras 70 peuvent être purement radiaux, comme l'illustre la figure 2. En variante, les bras peuvent être tangents au moyeu. A cet effet, comme l'illustre la figure 3, chaque bras 70 comporte une extrémité de jonction 78 avec le moyeu 76 qui est tangente avec le moyeu 76.

Le stator 66 de la machine électrique comporte pour sa part un harnais de servitudes électriques 102 qui est relié directement à un pylône (non représenté) de l'aéronef.

Ces différents éléments permettent de proposer un kit d'électrification 100 d'une turbomachine conventionnelle telle que décrite précédemment, afin d'en assurer l'électrification sans la remplacer.

Comme l'illustre la figure 6, un tel kit 100 comporte donc un cône adaptable 71 réalisé en deux parties respectivement amont et aval 71a, 71b, et un rotor 60 de machine électrique comportant un moyeu de rotor 76 de machine électrique relié par deux ou trois bras 70 à un anneau 62 comprenant ou portant des aimants permanents 74, qui est destiné à être fixé entre les deux parties amont et aval 71a, 71b du cône adaptable 71.

Dans ce kit, la partie aval 71b du cône adaptable 71 est configurée, notamment de par ses dimensions et points de fixation, pour être substituée au cône 72 conventionnel, et le moyeu 76 du rotor 60 de machine électrique est quant à lui configuré pour être fixé à la partie aval 71b du cône adaptable 71 et à l'arbre 54 de soufflante. La partie amont 71a du cône 71 est configurée pour être fixée au moyeu 76 du rotor 60 de machine électrique.

Le kit 100 comporte aussi un stator 66 qui est configuré pour être fixé en amont du carter de soufflante 40. Lorsqu'il comporte des bobinages comme c'est le cas ici, le stator 66 comporte un harnais de servitudes électriques 102 qui peut être relié directement à un pylône (non représenté) de l'aéronef sans modifier la turbomachine 10 existante. En particulier, le stator 66 peut comporter une face annulaire aval 104 qui peut être directement fixée à une face amont 106 du carter de soufflante 40.

Les éléments de ce kit peuvent être montés sur la turbomachine 10 les uns après les autres. Toutefois, de préférence, ils se présenteront sous la forme d'un module d'électrification d'une turbomachine conventionnelle, pré-assemblé et pouvant être acheminé comme tel sur un site de production. Ce module comprend le rotor 60 de la machine électrique dont le moyeu 76 est pré-assemblé aux parties amont et aval 71a, 71b de cône adaptable 71, et le stator 66 entourant le rotor 60. Avantageusement, le rotor 60 est bridé de manière amovible par rapport au stator 66 et ce n'est qu'une fois assemblé à la turbomachine 10 que ces brides amovibles sont ôtées.

Il est donc possible d'assurer l'électrification d'une turbomachine conventionnelle d'aéronef 10 à l'aide d'un module d'électrification du type décrit précédemment selon un procédé dont les étapes ont été représentées à la figure 7.

Au cours d'une première étape ET1, représentée également à la figure 4, on fournit une turbomachine conventionnelle 10.

Puis, dans une deuxième étape ET2, qui a aussi été représentée à la figure 6, on dépose le cône conventionnel 72 de la turbomachine 10.

Puis, au cours d'une troisième étape ET3, on présente le module d'électrification comprenant tous les éléments préassemblés du kit 100 devant la soufflante 12 de la turbomachine 10,

Puis, au cours d'une quatrième étape ET4, on fixe le stator 66 de la machine électrique au carter 40 et le cône adaptable 71, 71a, 71b, porteur du rotor 60 de la machine électrique, au disque 80 de la soufflante 12.

Puis, au cours d'une cinquième étape ET5 on raccorde le module d'électrification à l'aéronef. Dans le cas présent, on raccorde le harnais de servitudes électriques 102 à l'aéronef. Le résultat en est l'assemblage de la figure 6.

Optionnellement, au cours d'une sixième étape ET6, on ôte les brides liant le stator 66 au rotor 60.

L'invention permet donc d'assurer très simplement l'électrification d'une turbomachine 10 conventionnelle.

Cette électrification est d'autant plus avantageuse que la machine électrique peut donc être une option que la compagnie aérienne en charge de l'aéronef choisit ou non d'installer sur la turbomachine 10. Il est possible à ce titre d'envisager toute une gamme de puissances des machine électriques en fonction des besoins de la compagnie. En cas de dommage irréversible survenant à la turbomachine, la machine électrique peut également être réutilisée et remontée sur une turbomachine du même type. Inversement, en cas de dommage irréversible survenant à la machine électrique, celle-ci peut être démontée et une nouvelle machine électrique identique peut être montée sur la turbomachine.

## Revendications

1. Turbomachine d'aéronef (10), comportant une soufflante mobile (12) en rotation à l'intérieur d'un carter (40), et une machine électrique comportant un rotor (60) solidaire de la soufflante et un stator (66) solidaire dudit carter (40),
**caractérisée en ce que** le rotor (60) de la machine électrique comporte un anneau mobile (62) en rotation à l'intérieur du stator (66), qui est relié par des bras (70) à un cône (71) monté en amont de la soufflante (12).

2. Turbomachine selon la revendication précédente, **caractérisée en ce qu'**un moyeu (76) du rotor de la machine électrique, lié à l'anneau (62), est fixé entre deux parties respectivement amont et aval (71a, 71b) du cône (71).

3. Turbomachine (10) selon la revendication précédente, **caractérisée en ce qu'**un disque (80) de la soufflante (12) comporte une jante (82) qui comporte un alésage cannelé (84) permettant l'accouplement du disque (80) de soufflante à un arbre (54) de soufflante entraîné par la turbomachine (10), ladite jante virole (82) étant munie d'une première collerette amont externe (86), et **en ce que** :
- la partie aval (72b) du cône (72) comporte une extrémité aval (88) fixée sur la première collerette (86) amont externe du disque (80) de soufflante et une extrémité amont munie d'une deuxième collerette amont externe (90),
- le moyeu (76) de rotor de la machine électrique comporte une paroi sensiblement annulaire (92) comportant une extrémité aval (94) fixée à la deuxième collerette amont externe (90), une extrémité amont munie d'une troisième collerette amont externe (92), et un voile interne tubulaire (94) qui comporte un alésage cannelé (96) permettant l'accouplement du moyeu (76) de rotor de la machine électrique à l'arbre de soufflante (54),
- la partie amont (72a) du cône (72) comporte une extrémité aval (98) fixée sur la troisième collerette amont externe (92) du moyeu (76) de rotor de la machine électrique.

4. Turbomachine (10) selon l'une des revendications 2 ou 3, **caractérisée en ce que** le rotor (60) de la machine électrique comprend au moins deux bras (70) reliant le moyeu (76) à l'anneau (62).

5. Turbomachine (10) selon la revendication précédente, **caractérisée en ce que** le rotor (60) de la machine électrique comporte deux ou trois bras (70).

6. Turbomachine (10) selon l'une des revendications 4 ou 5, **caractérisée** en chaque bras (70) est sensiblement rectiligne et en ce qu'une aube (13) de la soufflante (12) est située sensiblement, selon l'écoulement des gaz au travers de la soufflante (12), dans le sillage dudit bras (70).

7. Turbomachine (10) selon la revendication précédente, **caractérisée en ce que** chaque bras (70) comporte une extrémité de jonction (78) avec le moyeu (76) qui est tangente avec ledit moyeu.

8. Kit d'électrification (100) d'une turbomachine conventionnelle (10) d'axe A comportant une soufflante (12) mobile en rotation à l'intérieur d'un carter (40), ladite soufflante (12) comportant un disque (80) entraîné en rotation par un arbre de soufflante (54) entraîné par la turbomachine et étant munie d'un cône conventionnel (72) fixé en amont dudit disque (80), **caractérisé en ce que** ledit kit (100) comporte :
- un stator (66), configuré pour être fixé en amont dudit carter (40),
- un cône adaptable (72) en deux parties (72a, 72b) respectivement amont et aval,
- un rotor (60) de machine électrique comportant un moyeu (76) de rotor de machine électrique relié par deux ou trois bras (70) à un anneau (62), et qui est destiné à être fixé entre les deux parties amont et aval (72a, 72b) du cône adaptable (72),
ladite partie aval (71b) du cône adaptable (71) étant configurée pour être substituée au cône conventionnel (72), le moyeu (76) du rotor de machine électrique étant configuré pour être fixé à la partie aval (71b) du cône adaptable (71) et à l'arbre de soufflante (54) entraîné par un arbre basse pression (44) de la turbomachine, et la partie amont du cône (71a) étant configurée pour être fixée au disque (80) du rotor (62) de machine électrique.

9. Module d'électrification d'une turbomachine conventionnelle comportant un assemblage modulaire d'éléments du kit (100) selon la revendication précédente, ledit module comprenant le rotor (60) de la machine électrique dont le moyeu (76) est assemblé aux parties amont et aval (72a, 72b) de cône (72) adaptable, et le stator (66), entourant ledit rotor (60), qui est bridé par rapport audit rotor (60).

10. Procédé d'électrification d'une turbomachine conventionnelle d'aéronef (10) à l'aide d'un module d'électrification selon la revendication précédente, **caractérisé en ce qu'**il comporte :
- une première étape (ET1) au cours de laquelle on fournit une turbomachine conventionnelle (10),
- une deuxième étape (ET2) au cours de laquelle on dépose le cône conventionnel (72) de la turbomachine (10),
- une troisième étape (ET3) au cours de laquelle on présente le module d'électrification devant la soufflante (12) de la turbomachine (10),
- une quatrième étape (ET4) au cours de laquelle on fixe le stator (66) de la machine électrique au carter (40) et le cône adaptable (71), porteur du rotor (60) de la machine électrique, au disque (80) de la soufflante (12),
- une cinquième étape (ET5) de raccordement électrique du module d'électrification à l'aéronef,
- une sixième étape optionnelle (ET6) au cours de laquelle on ôte au moins une bride liant le stator (66) au rotor (60).

## Patentansprüche

1. Flugzeug-Turbomaschine (10), die ein drehbewegliches Gebläse (12) im Inneren eines Gehäuses (40) und eine elektrische Maschine umfasst, die einen fest mit dem Gebläse verbundenen Rotor (60) und einen fest mit dem Gehäuse (40) verbundenen Stator (66) umfasst,
**dadurch gekennzeichnet, dass** der Rotor (60) der elektrischen Maschine einen drehbeweglichen Ring (62) im Inneren des Stators (66) umfasst, der über Arme (70) mit einem Konus (71) verbunden ist, der stromaufwärts des Gebläses (12) angebracht ist.

2. Turbomaschine nach dem vorstehenden Anspruch, **dadurch gekennzeichnet, dass** eine Nabe (76) des Rotors der elektrischen Maschine, die mit dem Ring (62) verbunden ist, zwischen zwei, stromaufwärtigen bzw. stromabwärtigen, Teilen (71a, 71b) des Konus (71) befestigt ist.

3. Turbomaschine (10) nach dem vorstehenden Anspruch, **dadurch gekennzeichnet, dass** eine Scheibe (80) des Gebläses (12) eine Felge (82) umfasst, die eine geriffelte Bohrung (84) umfasst, die die Kopplung der Gebläsescheibe (80) mit einer von der Turbomaschine (10) angetriebenen Gebläsewelle (54) ermöglicht, wobei die Ringfelge (82) mit einem ersten stromaufwärtigen äußeren Kragen (86) versehen ist, und dadurch, dass:
- der stromabwärtige Teil (72b) des Konus (72) ein stromabwärtiges Ende (88) umfasst, das am ersten stromaufwärtigen äußeren Kragen (86) der Gebläsescheibe (80) befestigt ist, und ein stromaufwärtiges Ende, das mit einem zweiten stromaufwärtigen äußeren Kragen (90) versehen ist,
- die Rotornabe (76) der elektrischen Maschine eine im Wesentlichen ringförmige Wand (92) umfasst, die ein stromabwärtiges Ende (94), das am zweiten stromaufwärtigen äußeren Kragen (90) befestigt ist, ein stromaufwärtiges Ende, das mit einem dritten stromaufwärtigen äußeren Kragen (92) versehen ist, und eine rohrförmige Innenbahn (94) umfasst, die eine geriffelte Bohrung (96) umfasst, die die Kopplung der Rotornabe (76) der elektrischen Maschine mit der Gebläsewelle (54) ermöglicht,
- der stromaufwärtige Teil (72a) des Konus (72) ein stromabwärtiges Ende (98) umfasst, das am dritten stromaufwärtigen äußeren Kragen (92) der Rotornabe (76) der elektrischen Maschine befestigt ist.

4. Turbomaschine (10) nach einem der Ansprüche 2 oder 3, **dadurch gekennzeichnet, dass** der Rotor (60) der elektrischen Maschine mindestens zwei Arme (70) umfasst, die die Nabe (76) mit dem Ring (62) verbinden.

5. Turbomaschine (10) nach dem vorstehenden Anspruch, **dadurch gekennzeichnet, dass** der Rotor (60) der elektrischen Maschine zwei oder drei Arme (70) umfasst.

6. Turbomaschine (10) nach einem der Ansprüche 4 oder 5, **dadurch gekennzeichnet, dass** jeder Arm (70) im Wesentlichen geradlinig ist und dadurch, dass sich eine Schaufel (13) des Gebläses (12) im Wesentlichen, gemäß der Strömung der Gase durch das Gebläse (12), im Anschluss an die Arm (70) befindet.

7. Turbomaschine (10) nach dem vorstehenden Anspruch, **dadurch gekennzeichnet, dass** jeder Arm (70) ein Übergangsende (78) zur Nabe (76) umfasst, das zur Nabe tangential ist.

8. Elektrifizierungsset (100) für eine konventionelle Turbomaschine (10) mit einer Achse A, die ein drehbewegliches Gebläse (12) im Inneren eines Gehäuses (40) umfasst, wobei das Gebläse (12) eine Scheibe (80) umfasst, die von einer von der Turbomaschine angetriebenen Gebläsewelle (54) drehend angetrieben wird und mit einem konventionellen Konus (72) versehen ist, der stromaufwärts der Scheibe (80) befestigt ist, **dadurch gekennzeichnet, dass** das Set (100) umfasst:
- einen Stator (66), der so konfiguriert ist, dass er stromaufwärts des Gehäuses (40) befestigt werden kann,
- einen anpassbaren Konus (72) aus zwei, stromaufwärtigen bzw. stromabwärtigen, Teilen (72a, 72b),
- einen Rotor (60) einer elektrischen Maschine, der eine Rotornabe (76) der elektrischen Maschine umfasst, die über zwei oder drei Arme (70) mit einem Ring (62) verbunden ist und die dazu bestimmt ist, zwischen den zwei stromaufwärtigen und stromabwärtigen Teilen (72a, 72b) des anpassbaren Konus (72) befestigt zu werden,
wobei der stromabwärtige Teil (71b) des anpassbaren Konus (71) so konfiguriert ist, dass er den konventionellen Konus (72) ersetzt, wobei die Nabe (76) des Rotors der elektrischen Maschine so konfiguriert ist, dass sie am stromabwärtigen Teil (71b) des anpassbaren Konus (71) und an der Gebläsewelle (54), die von einer Niederdruckwelle (44) der Turbomaschine angetrieben wird, befestigt werden kann, und wobei der stromaufwärtige Teil des Konus (71a) so konfiguriert ist, dass er an der Scheibe (80) des Rotors (62) der elektrischen Maschine befestigt werden kann.

9. Elektrifizierungsmodul für eine konventionelle Turbomaschine, das eine modulare Anordnung von Elementen des Sets (100) nach dem vorstehenden Anspruch umfasst, wobei das Modul den Rotor (60) der elektrischen Maschine, dessen Nabe (76) mit dem stromaufwärtigen und dem stromabwärtigen Teil (72a, 72b) des anpassbaren Konus (72) zusammengebaut ist, und den Stator (66) umfasst, der den Rotor (60) umgibt und der in Bezug auf den Rotor (60) angeflanscht ist.

10. Verfahren zum Elektrifizieren einer konventionellen Flugzeug-Turbomaschine (10) mit Hilfe eines Elektrifizierungsmoduls nach dem vorstehenden Anspruch, **dadurch gekennzeichnet, dass** es umfasst:
- einen ersten Schritt (ET1), bei dem eine konventionelle Turbomaschine (10) bereitgestellt wird,
- einen zweiten Schritt (ET2), bei dem der herkömmliche Konus (72) der Turbomaschine (10) ausgebaut wird,
- einen dritten Schritt (ET3), bei dem das Elektrifizierungsmodul vor das Gebläse (12) der Turbomaschine (10) gebracht wird,
- einen vierten Schritt (ET4), bei dem der Stator (66) der elektrischen Maschine am Gehäuse (40) und der anpassbare Konus (71), der den Rotor (60) der elektrischen Maschine trägt, an der Scheibe (80) des Gebläses (12) befestigt wird,
- einen fünften Schritt (ET5) des elektrischen Anschließens des Elektrifizierungsmoduls an das Flugzeug,
- einen optionalen sechsten Schritt (ET6), bei dem mindestens ein Flansch, der den Stator (66) mit dem Rotor (60) verbindet, entfernt wird.

## Claims

1. An aircraft turbomachine (10), comprising a fan (12) that is able to rotate inside a casing (40), and an electric machine comprising a rotor (60) secured to the fan and a stator (66) secured to said casing (40),
**characterised in that** the rotor (60) of the electric machine comprises a ring (62) that is able to rotate inside the stator (66), which is linked by arms (70) to a cone (71) mounted upstream from the fan (12).

2. The turbomachine according to the preceding claim, **characterised in that** a hub (76) of the rotor of the electric machine, connected to the ring (62), is attached between two upstream and downstream parts (71a, 71b) of the cone (71) respectively.

3. The turbomachine (10) according to the preceding claim, **characterised in that** a disc (80) of the fan (12) comprises a rim (82) which comprises a splined bore (84) allowing the fan disc (80) to be coupled to a fan shaft (54) driven by the turbomachine (10), said rim (82) being provided with a first external upstream collar (86), and **in that**:
- the downstream part (72b) of the cone (72) comprises a downstream end (88) attached to the first external upstream collar (86) of the fan disc (80) and an upstream end provided with a second external upstream collar (90),
- the rotor hub (76) of the electric machine comprises a substantially annular wall (92) comprising a downstream end (94) attached to the second external upstream collar (90), an upstream end provided with a third external upstream collar (92), and a tubular internal web (94) which comprises a splined bore (96) allowing the coupling of the rotor hub (76) of the electric machine to the fan shaft (54),
- the upstream part (72a) of the cone (72) comprises a downstream end (98) attached to the third external upstream collar (92) of the rotor hub (76) of the electric machine.

4. The turbomachine (10) according to any of claims 2 or 3, **characterised in that** the rotor (60) of the electric machine comprises at least two arms (70) linking the hub (76) to the ring (62).

5. The turbomachine (10) according to the preceding claim, **characterised in that** the rotor (60) of the electric machine comprises two or three arms (70).

6. The turbomachine (10) according to any of claims 4 or 5, **characterised in that** each arm (70) is substantially straight and **in that** a vane (13) of the fan (12) is located substantially, according to the flow of gases through the fan (12), in the wake of said arm (70).

7. The turbomachine (10) according to the preceding claim, **characterised in that** each arm (70) comprises a junction end (78) with the hub (76) which is tangent with said hub.

8. An electrification kit (100) for a conventional turbomachine (10) of axis A comprising a fan (12) that is able to rotate inside a casing (40), said fan (12) comprising a disc (80) driven in rotation by a fan shaft (54) driven by the turbomachine and being equipped with a conventional cone (72) attached upstream from said disc (80), **characterised in that** said kit (100) comprises:
- a stator (66), configured to be attached upstream from said casing (40),
- an adaptable cone (72) in two parts (72a, 72b) respectively upstream and downstream,
- an electric machine rotor (60) comprising an electric machine rotor hub (76) linked by two or three arms (70) to a ring (62), and which is intended to be attached between the two upstream and downstream parts (72a, 72b) of the adaptable cone (72),
said downstream part (71b) of the adaptable cone (71) being configured to be substituted for the conventional cone (72), the hub (76) of the electric machine rotor being configured to be attached to the downstream part (71b) of the adaptable cone (71) and to the fan shaft (54) driven by a low-pressure shaft (44) of the turbomachine, and the upstream part of the cone (71a) being configured to be attached to the disc (80) of the electric machine rotor (62).

9. An electrification module for a conventional turbomachine comprising a modular assembly of elements of the kit (100) according to the preceding claim, said module comprising the rotor (60) of the electric machine whose hub (76) is assembled to the upstream and downstream parts (72a, 72b) of the adaptable cone (72), and the stator (66), surrounding said rotor (60), which is flanged with respect to said rotor (60).

10. A method of electrifying a conventional aircraft turbomachine (10) using an electrification module according to the preceding claim, **characterized in that** it comprises:
- a first step (ET1) during which a conventional turbomachine (10) is provided,
- a second step (ET2) during which the conventional cone (72) of the turbomachine (10) is removed,
- a third step (ET3) during which the electrification module is presented in front of the fan (12) of the turbomachine (10),
- a fourth step (ET4) during which the stator (66) of the electric machine is attached to the casing (40) and the adaptable cone (71) carrying the rotor (60) of the electric machine is attached to the disc (80) of the fan (12),
- a fifth step (ET5) of electrically connecting the electrification module to the aircraft,
- an optional sixth step (ET6) during which at least one flange connecting the stator (66) to the rotor (60) is removed.
